# EUROPEAN PATENT APPLICATION

(11) **EP 1 413 193 A1**
(43) Date of publication of application: **28.04.2004**
(21) Application number: 03761372.6
(22) Date of filing: 29.07.2003
(51) Int. Cl.: A01K 85/01, H01L 41/113, H02N 2/00

(54) **LUMINESCENT LURE AND LUMINESCENT UNIT**

(30) Priority: 09.08.2002 JP 2002233285; 28.02.2003 JP 2003053630
(71) Applicant: Taiheiyo Cement Corporation, Tokyo 104-8518 (JP); VOC Direct Corporation, Kawasaki-shi, Ishikawa 920-0223 (JP); Nakatani, Shigeji, Kanazawas-shi, Ishikawa 921-8002 (JP)
(72) Inventor: NAKATANI, Shigeji, Kanazawa-shi, Ishikawa 921-8002 (JP); MIYATA, Noboru,c/o TAIHEIYO CEMENT CORPORATION, Chuo-ku, Tokyo 104-8518 (JP); HAYAMA, Noriaki, c/o TAIHEIYO CEMENT CORPORATION, Chuo-ku, Tokyo 104-8518 (JP); SUNAHARA, Koji, c/o VOC DIRECT CORPORATION, Kanazawa-shi, Ishikawa 920-0223 (JP)
(74) Representative: Modiano, Guido, Dr.-Ing.
(86) International application number: PCT/JP2003/009573
(87) International publication number: WO 2004/014132

(57) **Abstract**

A light-emitting lure (10A) comprises a lure fish body (11), a light-emitting diode (21) arranged in the lure fish body (11) such that the light-emitting diode (21) can be observed from the outside, a substantially flat plate-like piezoelectric element (22) as a power source for allowing the light-emitting diode (21) to emit light, a power transmitting circuit (30) for transmitting the electricity generated from the piezoelectric element (22) to the light-emitting diode (21), a pair of hooks (15a, 15b) for fishing the catch, eye metallic parts (14b, 14c) for mounting the hooks (15a, 15b) to the lure fish body (11), and an eye metallic part (14a) for mounting a fishing line to the lure fish body (11).

## Description

### [Technical Field]

The present invention relates to a light-emitting lure in which light is emitted from a lure fish body and a light-emitting unit used for the light-emitting lure.

### [Background Art]

The fishing effect in the lure fishing is greatly dependent on the situation as to whether the lure can be visually caught by the aimed fish, i.e., as to whether the lure attracts attentions from the aimed fish. Such being the situation, various measures are taken in the lure for visually attracting the attentions from the fish. One of such measures is to incorporate a light source in the lure fish body so as to cause the lure itself to emit light, thereby providing a "light-emitting lure".

The light-emitting lure has various outer appearances in accordance with the aimed fish. For example, a light-emitting diode is used in general as the light source in the light-emitting lure, and a rod-like small battery (primary battery) such as a lithium battery is used as a power source for causing the light-emitting diode to emit light, as disclosed in Japanese Patent Disclosure (Kokai) No. 11-196716, Japanese Patent Disclosure No. 2000-157107, and Japanese Patent Disclosure No. 2000-201578. Also, it is disclosed in Japanese Patent Disclosure No. 10-257839 that a solar cell and a secondary battery such as a nickel hydrogen battery are used in combination so as to provide a power source of the light-emitting lure, and that the electricity generated by the solar cell is stored in the secondary battery.

The light-emitting mode of the light-emitting diode in the light-emitting lure is either a flickering light emission utilizing an electronic circuit technology or a continuous light emission (lighting). Also, the method of withdrawing the battery or the manual method of inserting the battery into the same position in the opposite direction is employed for the turning on/off of the light-emitting diode.

However, the light-emitting diode, which is high in the brightness, is low in the illuminance. Therefore, if the light-emitting diode is kept turned on, the visual appealing effect given to the fish is diminished so as to give rise to the problem that it is difficult to obtain the expected fishing effect.

Also, in the lure in which the light-emitting diode is driven in the flickering mode by the circuit technology, an unnatural phenomenon is generated that the light-emitting diode flickers regardless of the movement of the lure, leading to the problem that it is difficult to obtain the expected fishing effect.

Further, when it comes to the use of the primary battery such as a lithium battery, it is necessary to dismantle the lure on the site for turning on/off the light-emitting diode. This is clearly troublesome.

Still further, in the case of the lure equipped with a power source utilizing a solar cell and a secondary battery in combination, it is unnecessary to replace the battery, therefore it is certainly unnecessary to dismantle the lure. However, it is difficult to expect the power generation by the solar cell within water except the case where the water has a high transparency and, thus, has a high brightness and except the highly rare environment such as a region in the vicinity of the water surface. Such being the situation, it is necessary to expose the solar cell to the solar light sufficiently before initiation of the fishing so as to operate the solar cell and, thus, to charge the secondary battery.

Incidentally, it is necessary for the lure to be kept provided with an auxiliary battery in preparation for the battery shortage. Where, for example, the lure fails to be provided with an auxiliary battery or where the auxiliary battery has been used up, a serious problem is generated that no more fishing can be continued.

### [Disclosure of the Invention]

A first object of the present invention is to provide a light-emitting lure that does not require a battery, i.e., a light-emitting lure that does not require the battery replacement or the charging operation. Also, a second object of the present invention is to provide a light-emitting lure capable of the natural flickering light emission conforming with the movement of the lure.

According to a first aspect of the present invention, there is provided a light-emitting lure, comprising:
a lure fish body that can be bent by an external stress;
at least one light-emitting element incorporated in the lure fish body such that the light-emitting element can be observed from outside; and
a flexion displacement type piezoelectric element incorporated in the lure fish body as a power source of the light-emitting element;
wherein the piezoelectric element generates an electric power in accordance with a bending of the lure fish body thereby causing the light-emitting element to emit light.

In the light-emitting lure of the particular construction, used suitably is a lure fish body having a joint structure prepared by connecting a plurality of fish body-constituting members each consisting of a hard material by using a soft material, and the piezoelectric element is incorporated in the joint portion of the joint structure. In the particular construction, desired bending characteristics can be obtained by the sum of the strains of a plurality of joint portions.

Also used as the lure fish body is a structure having a flexible structure formed of a soft resin material, and the piezoelectric element incorporated in the lure fish body in the step of forming the soft resin material into the shape of the lure fish body. In the particular structure, the desired bending characteristics can be derived from the characteristics of the soft resin material so as to make it possible to incorporate the piezoelectric element inside the lure fish body without impairing the unity with the lure fish body.

The light-emitting diode can be used suitably as the light-emitting element. For incorporating the light-emitting element in the lure fish body, it is possible to bury the light-emitting element in the lure fish body by using a transparent or translucent resin material for forming the lure fish body. In this case, the light emitted from the light-emitting element is emitted to the outside through the lure fish body. As a result, it is possible for the light-emitting element a soft and distinctive light toward the outside of the lure fish body.

It is also desirable to incorporate the light-emitting element in the lure fish body so as to form two eyes of the lure fish body. In this case, it is unnecessary to mount pseudo eyes to the lure fish body. Further, it is desirable to arrange a plurality of light-emitting elements differing from each other in colors of the light emitted therefrom and to incorporate in the lure fish body a changeover switch that can be operated from the outside so as to permit selectively this plurality of light-emitting elements to emit light of a desired color. As a result, it is possible to select the emitted light of desired color which readily attracts attentions from the aimed fish in accordance with the fishing time and the fishing ground.

According to a second aspect of the present invention, there is provided a light-emitting lure, comprising:
a lure fish body;
a light-emitting element incorporated in the lure fish body such that the incorporated light-emitting element can be observed from outside;
a flexion displacement type piezoelectric element arranged inside the lure fish body such that the arranged piezoelectric element can be bent;
a metallic part including an external force-acting portion formed at one end in a longitudinal direction such that an external force acts on said external force-acting portion, and a fulcrum portion formed in an intermediate portion in the longitudinal direction such that a seesaw motion is generated when a prescribed force acts on the external force-acting portion, the metallic part being arranged in the lure fish body such that the external force-acting portion is positioned outside the lure fish body and the other end in the longitudinal direction is connected to or engaged with a free end of the piezoelectric element; and
power transmitting means that permits an electricity generated from the piezoelectric element to be transmitted to the light-emitting element by a bending of the piezoelectric element;
wherein, when a prescribed force is applied to the external force-acting portion, the piezoelectric element is bent by a seesaw motion generated within the metallic part so as to cause the piezoelectric element to generate an electric power and to cause the light-emitting element to emit light.

In the light-emitting lure according to the second aspect of the present invention, a light-emitting diode is used suitably as the light-emitting element. Also, it is desirable to arrange a resin sealing portion for preventing water intrusion from around the metallic part into the inner region of the lure fish body. It is desirable for the resin sealing portion to be formed of a resin selected from the group consisting of a foamed silicone resin, a foamed urethane resin, a silicone rubber resin and an urethane resin. In this case, the water intrusion into the inner region of the lure fish body can be prevented without impairing the movement of the metallic part. Also, it is possible to load a soft resin in an inner region of the lure fish body so as to protect, for example, the piezoelectric element from water. A silicon rubber resin is used suitably as the soft resin.

In the light-emitting lure according to each of the first and second aspects of the present invention, since electricity generated from the piezoelectric element is used for causing the light-emitting element incorporated in the light-emitting lure to emit light, it is unnecessary to use a primary battery, a solar cell and secondary battery. It follows that it is unnecessary to perform operations such as the replacement of the battery and charging operation.

In the light-emitting lure according to the first aspect of the present invention, the lure fish body is bent when the lure fish body is jerked through the fishing line, or when the resistance of water applied to the lure fish body is changed by, for example, the change in the environment of the fishing ground such as waves and the flow of the sea water. In this case, the piezoelectric element is bent so as to generate an electric power, and the generated electricity is transmitted to the light-emitting element so as to cause the light-emitting element to emit light. In this fashion, the light-emitting element is caused to perform the natural flickering light emission in accordance with the movement of the lure fish body. The piezoelectric element is warped when the lure fish body is jerked through the fishing line in the light-emitting lure according to the second aspect of the present invention so as to make it possible to cause the light-emitting element to perform the natural flickering light emission in accordance with the movement of the lure fish body. It follows that it is possible to improve the capability for the fish to recognize the lure fish body.

According to a third aspect of the present invention, there is provided a light-emitting unit, comprising:
a cylindrical portion having both ends hermetically sealed with a pair of transparent lids;
a flexible rocking plate portion having one end fixed to the cylindrical portion;
a pair of light-emitting elements arranged inside the transparent lids; and
a flexion displacement type piezoelectric element arranged as a power source of the light-emitting element inside the rocking plate portion;
wherein the piezoelectric element generates an electric power by a bending of the rocking plate portion thereby causing the light-emitting element to emit light.

In the light-emitting unit according to the third aspect of the present invention, it is possible for the pair of transparent lids at both ends of the cylinder portion to constitute the both eyes of the lure fish body, if the position of the cylinder portion is located on the side of the head portion of the lure fish body while locating the rocking plate portion on the side of the tail of the lure fish body in forming the lure fish body. Also, it is possible to allow the both eyes of the lure fish body to emit light if the light-emitting diodes arranged inside the transparent lids are allowed to emit light when the lure fish body is bent. ,

### [Brief Description of the Drawing]

FIG. 1 is a side view showing the construction of a light-emitting lure according to a first embodiment of the present invention;
FIG. 2 is a cross sectional view showing the construction of a light-emitting lure according to the first embodiment of the present invention;
FIG. 3 is another cross sectional view showing the construction of a light-emitting lure according to the first embodiment of the present invention;
FIG. 4 is a circuit diagram showing a power transmitting circuit used in the light-emitting lure of the present invention;
FIG. 5 is a perspective view showing the construction of a light-emitting lure according to a second embodiment of the present invention;
FIG. 6 is a circuit diagram showing another power transmitting circuit used in the light-emitting lure of the present invention;
FIG. 7 is a cross sectional view showing the construction of a light-emitting lure according to a third embodiment of the present invention;
FIG. 8 is an oblique view showing the light-emitting unit of the present invention;
FIG. 9 is a side view showing the construction of a light-emitting lure according to a fourth embodiment of the present invention;
FIG. 10 is a cross sectional view showing the construction of a light-emitting lure according to the fourth embodiment of the present invention;
FIG. 11 is another cross sectional view showing the construction of a light-emitting lure according to the fourth embodiment of the present invention;
FIG. 12 shows the mode of the bending of the piezoelectric element included in the light-emitting lure according to the fourth embodiment of the present invention, and the construction of the light emission control circuit;
FIG. 13 shows another construction of a metallic part used in the light-emitting lure according to fourth embodiment of the present invention; and
FIG. 14 is a cross sectional view showing the construction of a light-emitting lure according to a fifth embodiment of the present invention.

### [Best Mode of Working the Invention]

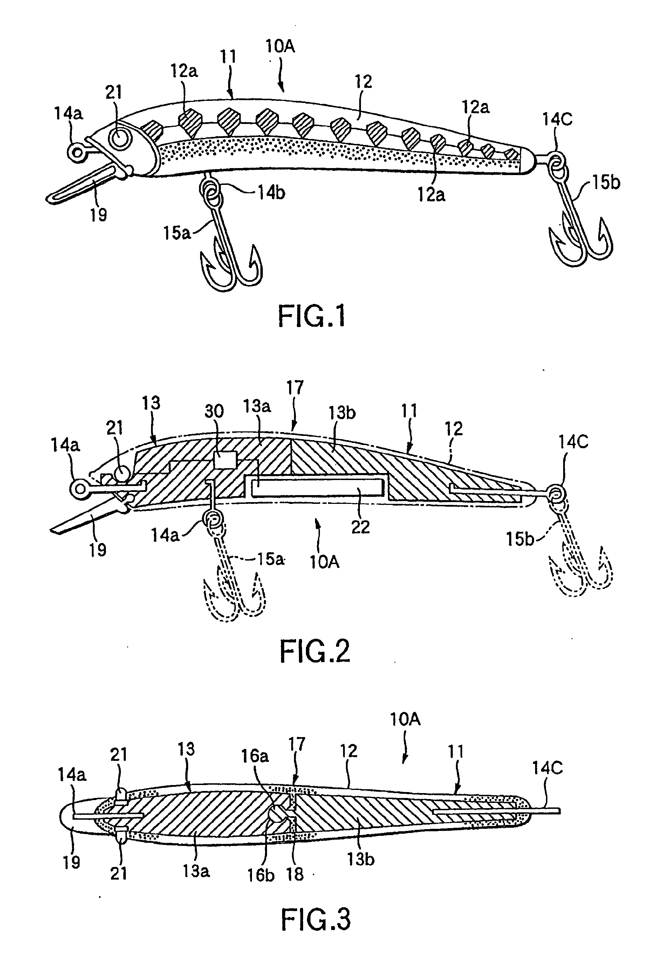

Some embodiments of the present invention will now be described in detail with reference to the accompanying drawings. Specifically, FIG. 1 is a side view of a light-emitting lure 10A, which is a light-emitting lure according to a first embodiment of the present invention, FIG. 2 is a cross sectional view of the light-emitting lure 10A shown in FIG. 1, and FIG. 3 is another cross sectional view of the light-emitting lure 10A.

As shown in the drawing, the light-emitting lure 10A comprises a lure fish body 11, a light-emitting diode 21, which is a light-emitting element mounted to the lure fish body 11 so as to be observed from the outside, a substantially flat plate-like piezoelectric element 22 performing the function of a power source for causing the light-emitting diode 21 to emit light, a power transmitting circuit 30 for transmitting the electricity generated from the piezoelectric element 22 to the light-emitting diode 21, a pair of hooks 15a, 15b for catching the aimed fish, eye metallic parts 14b, 14c for mounting the hooks 15a, 15b to the lure fish body 11, an eye metallic part 14a for mounting a fishing line to the lure fish body 11, and a lip 19 mounted to the head portion of the lure fish body 11.

The lure fish body 11 comprises a skeletal member 13 consisting of, for example, a hard material prepared by zinc die-casting and a resin member 12 surrounding the skeletal member 13 so as to determine the profile of the lure fish body 11 and made of, for example, a silicone resin. The skeletal member 13 comprises a first skeletal piece 13a on the side of the head portion and a second skeletal piece 13b on the side of the tail. A concave portion 16a is formed in the first skeletal piece 13a, and a knuckle portion 16b is formed in the second skeletal piece 13b. The knuckle portion 16b is engaged with the concave portion 16a such that the knuckle portion 16b can be swung within the concave portion 16a so as to form a joint portion 17 between the first skeletal piece 13a and the second skeletal piece 13b. A clearance 18 is formed in the joint portion 17. Because of the particular construction, the skeletal member 13 is capable of being bent by a prescribed angle in the joint portion 17.

The light-emitting diodes 21 are used as the both eyes of the lure fish body 11. Also, the two eye metallic parts 14a, 14b are strongly fixed to the first skeletal piece 13a, and the eye metallic part 14c is strongly fixed to the second skeletal piece 13b. The lip 19 is fitted to the tip portion of the first skeletal piece 13a. Incidentally, the lip 19 is mounted in accordance with the use of the light-emitting lure 10A, when necessary. Further, a surface member 12a made of reflective material is mounted to the resin member 12 in a manner to form a scale pattern.

For example, a so-called "monomorph element", which consists of a thin piezoelectric ceramic plate polarized in the thickness direction and having an electrode formed on each of the front and back surfaces thereof is used as the piezoelectric element 22. The piezoelectric element 22 is a flexion displacement type element that generates an electric power by the bending upon receipt of an external stress.

The piezoelectric element 22 is buried in the resin member 12 below the joint portion 17. The piezoelectric element 22 is bent by the bending of the lure fish body 11 in the joint portion 17 so as to generate an electric power. The electricity generated by the piezoelectric element 22 is transmitted to the light-emitting diode 21 through the power transmitting circuit 30 buried in the lure fish body 11 so as to cause the light-emitting diode 21 to emit light.

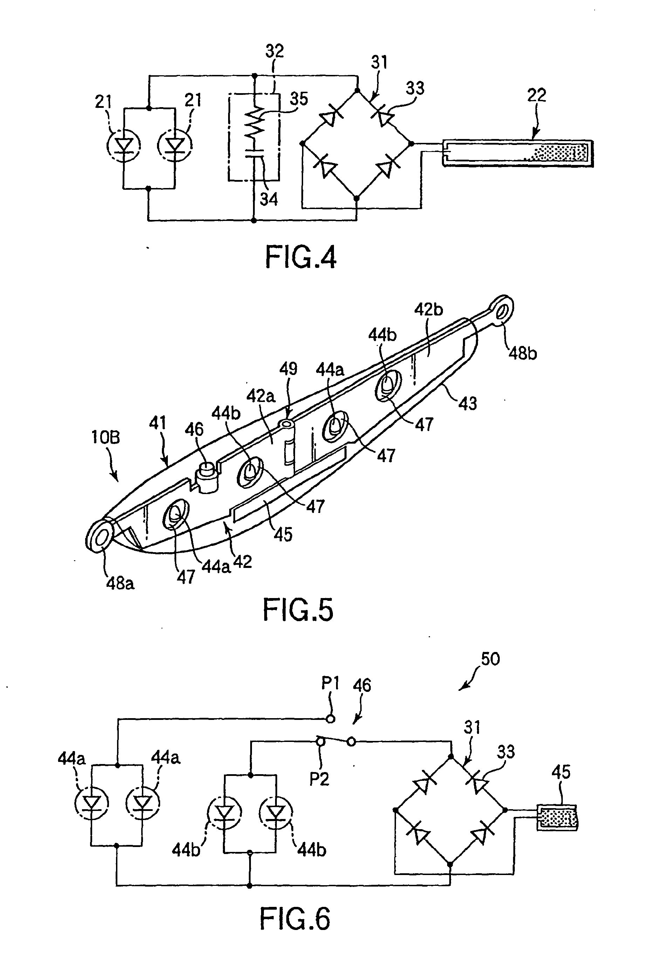

FIG. 4 shows the construction of the power transmitting circuit 30 used in the light-emitting lure. As shown in the drawing, the power transmitting circuit 30 comprises a rectifying circuit 31 for rectifying the electricity generated from the piezoelectric element 22 and a charge-discharge circuit 32, which stores partly the electricity rectified by the rectifying circuit 31 and supplies the stored electricity to the light-emitting diode 21. The rectifying circuit 31 consists of diodes 33 which are connected to each other to form a bridge structure. On the other hand, the charge-discharge circuit 32 includes a capacitor 34 for storing/releasing the electricity and a resistance element 35 connected in series to the capacitor 34.

According to the power transmitting circuit 30 of the particular construction described above, that portion of the electricity rectified by the rectifying circuit 31 which is required for causing the light-emitting diode 21 to emit light is transmitted into the light-emitting diode 21 on the real time basis so as to cause the light-emitting diode 21 to emit light. Also, the remaining electricity, i.e., the excess electricity, is temporarily stored in the capacitor 34. It follows that, even if the piezoelectric element 22 ceases to generate an electric power, the electricity is transmitted from the capacitor 34 into the light-emitting diode 21 so as to prolong the light-emitting time of the light-emitting diode 21. Incidentally, the light-emitting time of the light-emitting diode 21 is determined by the resistance value of the resistance element 35.

Since the light-emitting lure 10A is provided with the power generating means of the piezoelectric element 22 inside the light-emitting lure 10A, a battery need not be used in the light-emitting lure 10A. It follows that it is unnecessary to replace and charge the battery. In addition, an auxiliary battery need not be prepared.

The light-emitting lure 10A is constructed such that the lure fish body 11 is operated within water via the fishing line joined to the eye metallic part 14a, like the ordinary lure. Since various external stresses such as the strength of the wave and the operating force transmitted through the fishing line are applied to the lure fish body 11 within water, the lure fish body 11 is bent in response to the external stress. If the lure fish body 11 is bent in this fashion, the piezoelectric element 22 positioned in the joint portion 17 is bent so as to generate an electric power, with the result that the light-emitting diode 21 is turned on or flickered.

As described above, the light-emitting lure 10A is not lit or flickered at a period predetermined by, for example, an electric circuit, but is caused to emit light in response to the situation in the fishing ground. As a result, the aimed fish is unlikely to make precautions against the light-emitting lure 10A, and the light-emitting lure 10A gives a visual appealing effect to the fish. It follows that the fishing effect can be improved.

A light-emitting lure 10B, which is a light-emitting lure according to the second embodiment of the present invention, will now be described with reference to FIG. 5, which is a perspective view.

As shown in the drawing, the light-emitting lure 10B comprises a lure fish body 41 consisting of a skeletal member 42 and a resin member 43 covering the skeletal member 42, light-emitting diodes 44a, 44b buried in the lure fish body 41, and a flat plate-like piezoelectric element 45 performing the function of the power source of the light-emitting diodes 44a, 44b.

The skeletal member 42 is prepared by applying, for example, a punching process to a metal plate. The skeletal member 42 comprises a first skeletal piece 42a on the side of the head and a second skeletal piece 42b on the side of the tail. The first skeletal piece 42a is joined to the second skeletal piece 42b by a hinge portion 49 such that the first and second skeletal pieces 42a and 42b are capable of bending. Also, an eye metallic part 48a is formed integral with the end portion of the first skeletal piece 42a, and an eye metallic part 48b is formed integral with the rear end portion of the second skeletal piece 42b. As a result, it is possible to omit the step of mounting the eye metallic part to the skeletal member 42 in the manufacturing process of the light-emitting lure 10B. Incidentally, a fishing line is hook on the eye metallic part 48a, and a hook is hook on the eye metallic part 48b.

Four holes 47 are formed apart from each other in the skeletal member 42. Any one of light-emitting diodes 44a and 44b differing from each other in the color of the emitted light is arranged in each of these four holes 47. It is also possible to use four light-emitting diodes differing from each other in the color of the emitted light in place of the light-emitting diodes 44a and 44b.

The resin member 43 is formed of a transparent resin material or a translucent resin material which permits observing from the outside the light emitted from the light-emitting diodes 44a, 44b and which is soft enough to bend the skeletal member 42. Incidentally, it is possible to mix a metal powder or a light storing agent with a transparent resin material so as to color the transparent resin material.

The piezoelectric element 45 is buried in the resin member 43 on the lower side of the hinge portion 49. The piezoelectric element 45 is caused to be bent by the bending of the skeletal member 42 in the hinge portion 49 so as to generate an electric power. The piezoelectric element 45 is equal in construction to the piezoelectric element 22 described previously.

A power transmitting circuit 50, which is not shown in FIG. 5, for transmitting the electricity generated by the piezoelectric element 45 to the light-emitting diode 44a or 44b is incorporated in the lure fish body 41. FIG. 6 shows the construction of the power transmitting circuit 50 incorporated in the lure fish body 41.

The power transmitting circuit 50 comprises a changeover switch 46 for switching the light emission between the light-emitting diode 44a and the light-emitting diode 44b, and the rectifying circuit 31. The rectifying circuit 31 is equal to that shown in FIG. 4 referred to previously. The changeover switch 46 is of a simple construction that connection points P1, P2 connected to the light-emitting diodes 44a, 44b, respectively, are changed over. The changeover switch 46 is arranged in the back portion of the skeletal member 42 and is buried in the resin member 43 so as to be operated from the outside. Incidentally, for making the changeover switch operable from the outside, it is possible to employ a water resistant structure in the changeover switch and to permit the operating portion of the changeover switch to protrude from the resin member 43.

The light-emitting diode to be used can be selected by operating the changeover switch 46 such that the electric current flows from the rectifying circuit 31 into the two light-emitting diodes 44a alone or the electric current flows from the rectifying circuit 31 into the two light-emitting diodes 44b alone. In other words, in the light-emitting lure 10B, it is possible to selectively allow the light-emitting diodes alone, which emit light rays of the desired color, to emit light rays.

In the light-emitting lure 10B, the light is emitted from the light-emitting diode 44a or the light-emitting diode 44b through the transparent or translucent resin member 43, it is possible to achieve a soft bright state as observed in the natural luminescent creatures. Also, since it is possible to select the color of the light emitted from the light-emitting diode in accordance with the situation such as the fishing time, it is possible for a single kind of lure to cope with various fishing environments.

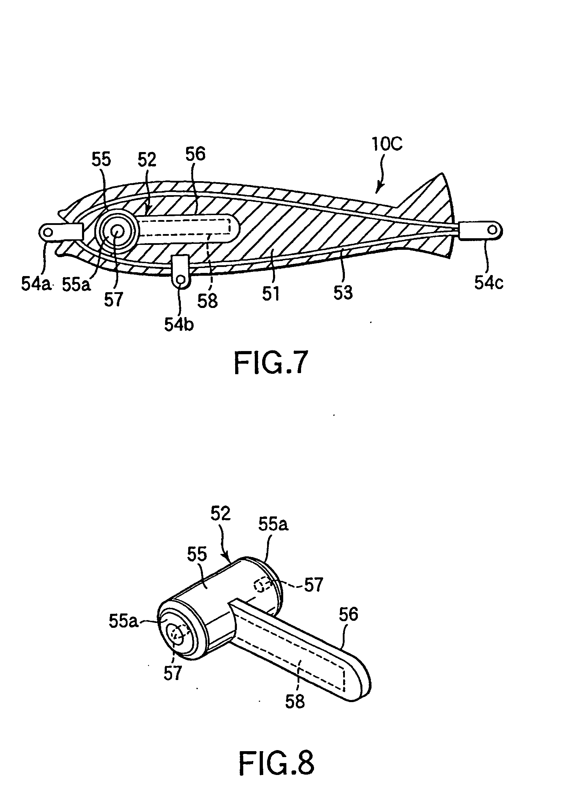

A light-emitting lure 10C, which is a light-emitting lure according to a third embodiment of the present invention, will now be described with reference to the cross sectional view shown in FIG. 7.

As shown in the drawing, the light-emitting lure 10C comprises a lure fish body 51, a light-emitting unit 52 buried in the lure fish body 51, a wire 53 buried in the lure fish body 51, and eye metallic parts 54a to 54c joined to the wire 53.

The lure fish body 51 is formed of a soft resin material and is flexible. In other words, the lure fish body 51 does not include a skeletal member. However, the eye metallic parts 54a to 54c are attached to the wire 53 buried in the lure fish body 51. It follows that, even if a fishing line is attached to, for example, the eye metallic part 54a and the hooks are attached to the eye metallic parts 54b, 54c, the eye metallic parts 54b, 54c and the hooks attached thereto are not dropped.

FIG. 8 is an oblique view schematically showing the construction of the light-emitting unit 52. As shown in the drawing, the light-emitting unit 52 comprises a cylinder portion 55 having the both ends hermetically closed by a pair of transparent lids 55a, a flexible rocking plate 56 having one end fixed to the cylinder portion 55, a pair of light-emitting diodes 57 arranged inside the cylinder portion 55 in the vicinity of the pair of the transparent lids 55a, a substantially flat plate-like piezoelectric element 58 incorporated in the rocking plate 56 as a power source of the light-emitting diode 57, and a power transmitting circuit (not shown) for transmitting the electricity generated by the piezoelectric element 58 to the light-emitting diode 57.

The cylinder portion 55 is prepared by, for example, a zinc die-casting. Also, a lens formed of a transparent material such as glass or an acrylic resin is used as the transparent lid body 55a. The rocking plate 56 is formed of, for example, a silicone resin having an appropriate elasticity. Since the lure fish body 51 is formed of a soft resin material, the rocking plate 56 is also bent when the lure fish body 51 is bent, with the result that the piezoelectric element 58 is bent so as to generate an electric power. Incidentally, the piezoelectric element 58 is equal in construction to the piezoelectric element 22 described previously. Also, the power transmitting circuit (not shown) is equal to the power transmitting circuit 30 described previously.

For manufacturing the light-emitting lure 10C, the light-emitting unit 52 is incorporated so as to cause the transparent lids 55a to constitute the both eyes of the lure fish body 51, and the wire 53 having the eye metallic parts 54a to 54c is incorporated in a prescribed position.

As described above, it is unnecessary to incorporate individually the light-emitting diode, the piezoelectric element, etc. in the lure fish body 51 in the manufacturing process of the light-emitting lure 10C so as to make it possible to markedly improve the manufacturing efficiency of the lure fish body 51. Also, it is possible to manufacture simply lure fish bodies having various outer shapes by using the light-emitting unit 52.

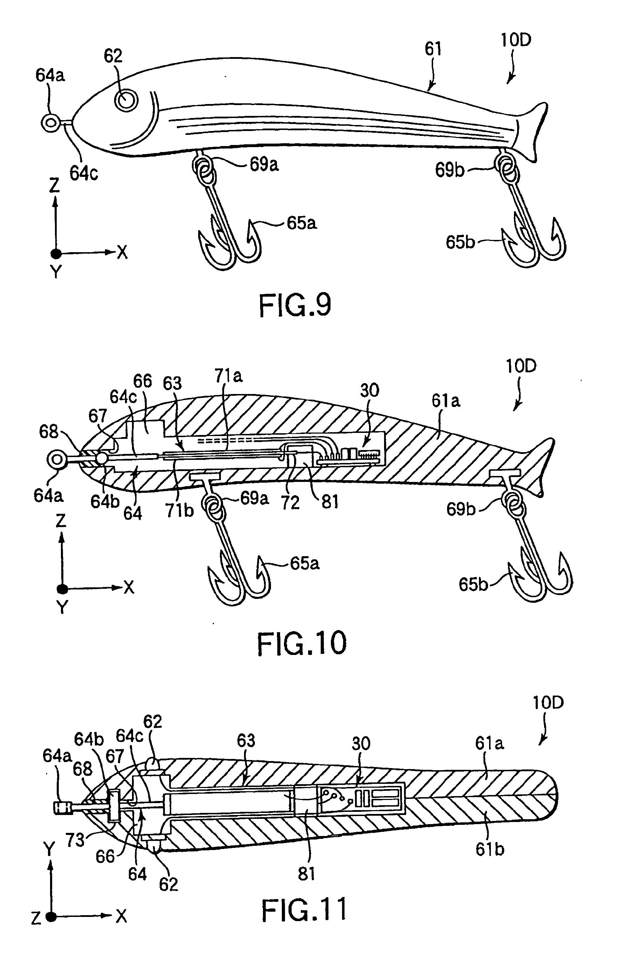

A light-emitting lure 10D, which is a light-emitting lure according to a fourth embodiment of the present invention, will now be described. FIG. 9 is a side view schematically showing the construction of the light-emitting lure 10D, and each of FIGS. 10 and 11 is a cross sectional view schematically showing the construction of the light-emitting lure 10D. For facilitating the description in the following, defined is a three dimensional coordinate system having three planes perpendicular to each other, in which the axis extending in the longitudinal direction from the head portion toward the tail portion of the light-emitting lure 10D constitutes the X-axis, the axis extending from the ventral side toward the back side of the light-emitting lure 10D constitutes the Z-axis, and the axis extending through the chest portion of the light-emitting lure 10D constitutes the Y-axis.

The light-emitting lure 10D comprises a lure fish body 61 shaped like a pseudo fish having a vacant portion 66, a light-emitting diode 62 mounted to the lure fish body 61 such that the light-emitting diode 62 can be observed from the outside, a piezoelectric element 63 arranged inside the vacant portion 66, a metallic part 64 including a ring portion 64a on which is exerted an external force and a fulcrum portion 64b mounted in the mid-point in the longitudinal direction so as to permit the metallic part 64 to perform a seesaw motion when an external force is exerted on the ring portion 64a, and a power transmitting circuit 30 for transmitting the electricity generated by the bending of the piezoelectric element 63 to the light-emitting diode 62.

The lure fish body 61 is formed of, for example, a metallic material such as zinc, a zinc die-casting or a hardened steel; an engineering plastic material such as an epoxy resin or an ABS resin; or various hard materials such as a ceramic material, a porcelain material, a glass material and a fiber reinforced plastic material. In order to allow the lure fish body 61 to assume a good balance within water, it is desirable for the lure fish body 61 to be formed of a plurality of materials such that the ventral side is rendered heavy and the back side is rendered light. It is possible to attach various decorative articles such as a scale member to the surface of the lure fish body 61 or to depict various patterns such as a stripe pattern or a scale pattern on the surface of the lure fish body 61.

As shown in FIG. 11, the lure fish body 61 can be substantially equally divided along the Z-X plane into lure fish body members 61a and 61b. In other words, the lure fish body members 61a, 61b are bonded to each other with, for example, an adhesive so as to form an integral structure of the lure fish body 61. Incidentally, the adhesive, which is not shown in FIG. 11, plays the role of a sealing material for preventing the water intrusion into the vacant portion 66. It is possible to use, for example, screws for bonding the lure fish body members 61a, 61b to each other to form an integral structure. In this case, it is desirable to arrange seal rings along the outer contours of the lure fish body members 61a, 61b in order to prevent the water intrusion into the vacant portion 66. Also, it is possible to divide the lure fish body 61 along the X-Y plane into a plurality of lure fish body members and to bond the lure fish body members to each other with an adhesive so as to form an integral structure of the lure fish body 61.

It is unnecessary for the lure fish body members 61a, 61b to be shaped in symmetry with respect to the X-axis as shown in FIG. 11. In other words, it is possible for the lure fish body members 61a, 61b to be shaped asymmetric with respect to the X-axis such that the lure fish body members 61a, 61b differ from each other in the outer appearance as viewed in the Y-direction.

Eye metallic parts 69a, 69b are buried in the vicinity of the ventral portion and the tail portion, respectively, of the lure fish body member 61a. Also, hooks 65a and 65b are attached to the eye metallic parts 69a and 69b, respectively. Incidentally, the fixing positions of the eye metallic parts 69a, 69b to which the hooks 65a, 65b are attached are not limited to the positions shown in FIGS. 9 and 10. Also, the attaching method of the hooks 65a, 65b is not limited to the method using the eye metallic parts 69a, 69b. It is possible to design appropriately the attaching method of the hooks 65a, 65b in accordance with the kind and size of the aimed fish.

The color of the light emitted from the light-emitting diode 62 is not particularly limited. In the light-emitting lure 10D, the light-emitting diode 62 is incorporated so as to constitute the both eyes of the lure fish body 61. However, it is possible to incorporate the light-emitting diode 62 in other portion of the lure fish body 61.

One end portion in the longitudinal direction of the piezoelectric element 63 is fixed to a fixed part 81 mounted within the vacant portion 66. The piezoelectric element 63 has a so-called "bimorph" structure in which rectangular piezoelectric ceramic plates 71a, 71b having an electrode (not shown) mounted on the front and back surfaces thereof are attached to the front and back surfaces of a reinforcing plate 72 such as a metal thin plate, an FRP (Fiber Reinforced Plastic) thin plate, a resin sheet or a flexible printed wiring board.

The metallic part 64 is arranged in the lure fish body 61 such that the ring portion 64a is positioned outside the mouth portion of the lure fish body 61 and the other end of the metallic part 64 in the longitudinal direction is connected to the free end of the piezoelectric element 63. Since a fishing line is attached in general to the ring portion 64a, the external force is exerted to the ring portion 64a through the fishing line. Also, the fulcrum portion 64b of the metallic part 64 shown in FIGS. 10 and 11 is joined to a shaft portion 64c of the metallic part 64 so as to form an integral structure that is shaped columnar. The columnar fulcrum portion 64b is arranged within a columnar hole portion 73 formed in the lure fish body 61 so as to permit the metallic part 64 to perform a seesaw motion about the fulcrum portion 64b.

For arranging the metallic part 64 in the lure fish body 61, the lure fish body 61 is provided with a passageway 67 communicating with the vacant portion 66 through the mouth portion, as shown in FIGS. 10 and 11. A resin sealing portion 68 is formed in the passageway 67 in order to prevent the water immersion from around the metallic part 64 into the vacant portion 66, i.e., in order to prevent the water immersion from the mouth portion into the vacant portion 66 through the passageway 67. The resin material used for forming the resin sealing portion 68 includes a soft resin that can be deformed in conformity with the seesaw motion of the metallic part 64. To be more specific, the soft resin noted above includes, for example, a foamed silicone resin, a foamed urethane resin, a silicone rubber resin, and an urethane resin. The angle (swinging angle) within which the metallic part 64 is capable of performing the seesaw motion is defined by the collision of the shaft portion 64c of the metallic part 64 against the wall of the passageway 67. In other words, the swinging angle of the metallic part 64 can be controlled by changing the up-down width of the passageway 67.

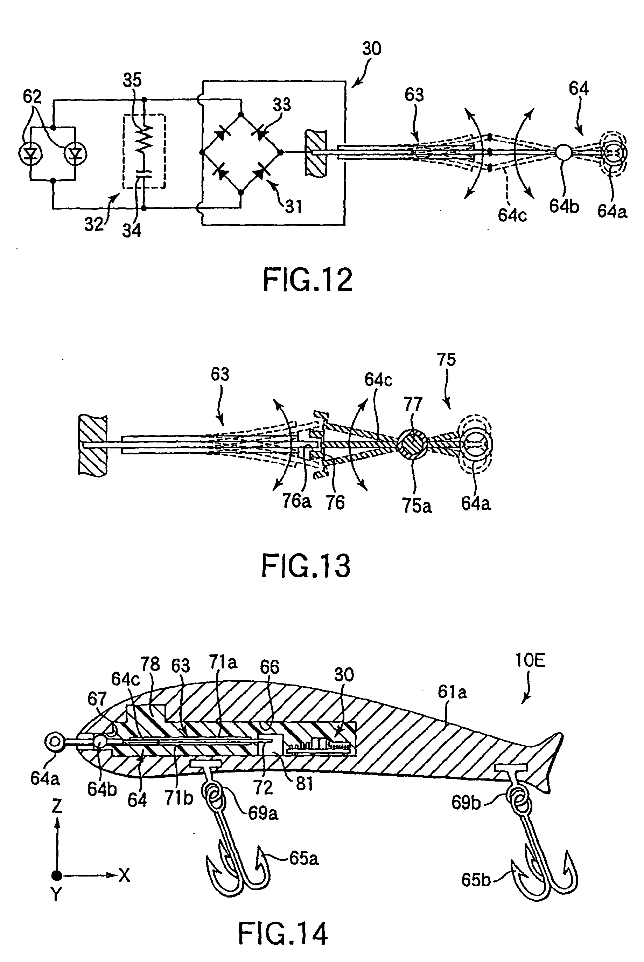

FIG. 12 shows the mode of the bending of the piezoelectric element 63 and the construction of the power transmitting circuit 30. The bending displacement of the piezoelectric element 63 is generated by the seesaw motion of the metallic part 64 so as to permit the piezoelectric element 63 to generate an electric power. The electric power thus generated is transmitted through the power transmitting circuit 30 into the light-emitting diode 62 so as to cause the light-emitting diode 62 to emit light. Incidentally, the power transmitting circuit 30 shown in FIG. 12 is equal to the power transmitting circuit 30 referred to previously in conjunction with FIG. 4.

When the metallic part 64 performs the seesaw motion, the distance between the edge of the metallic part 64 and the free end of the piezoelectric element 63 is slightly changed. Therefore, if the piezoelectric element 63 is insulated from the metallic part 64 with, for example, a resin member having a shrinking capability and an elasticity, it is possible to avoid application of an undesired stress between the piezoelectric element 63 and the metallic part 64 while allowing the piezoelectric element 63 to be bent in conformity with the movement of the metallic part 64, with the result that it is possible for the piezoelectric element 63 and the metallic part 64 to be kept in contact with each other.

If force having a component in the Z-direction is applied to the ring portion 64a through the fishing line by the operation of the fishing rod performed by the angler or through the wave or the swell in the light-emitting lure 10D of the construction described above, the metallic part 64 is caused to perform the seesaw motion, thereby bending the piezoelectric element 63. As a result, the piezoelectric element 63 is caused to generate an electric power. The electric power thus generated is transmitted through the power transmitting circuit 30 into the light-emitting diode 62 so as to cause the light-emitting diode 62 to emit light. In other words, the light-emitting diode 62 is caused to emit light substantially simultaneously with the movement of the light-emitting lure 10D caused by the application of force to the ring portion 64a.

The light-emitting lure 10D can be modified as follows.

FIG. 13 shows another construction of a metallic part according to fourth embodiment of the present invention, which is arranged in the lure fish body 61. The metallic part 75 shown in FIG. 13 comprises the ring portion 64a, which is formed at one end in the longitudinal direction of the metallic part 75 and to which is attached the fishing line, a holding member 76, which is formed at the other end in the longitudinal direction of the metallic part 75 and which includes recessed portions 76a, and an annular fulcrum portion 75a formed in the intermediate portion of the metallic part 75. A supporting column 77 is inserted into the fulcrum portion 75a so as to permit the metallic part 75 to swing by a prescribed angle about the supporting column 77 acting as the fulcrum. In this fashion, the metallic part 75 is capable of performing the seesaw motion. It is possible for the supporting column 77 to be formed integral with the lure fish body 61. Alternatively, it is possible for the supporting column 77 formed by another member to be arranged in the lure fish body 61.

In the case of using the metallic part 75 of the particular construction described above, the tip of the piezoelectric element 63 is engaged with the recessed portion 76a in a depth that does not cause the tip of the piezoelectric element 63 to be detached from the recessed portion 76a when the metallic part 75 performs the seesaw motion. In the particular construction, the metallic part 75 need not be bonded to the piezoelectric element 63 so as to make it possible to prevent an undesired stress from being applied between the metallic part 75 and the piezoelectric element 63 when the seesaw motion of the metallic part 75 is generated and, thus, the piezoelectric element 63 is bent and displaced.

In the light-emitting lure 10D, the power transmitting circuit 30 is arranged in the vicinity of the tail portion of the lure fish body 61, as shown in FIGS. 10 and 11. However, it is possible to arrange the power transmitting circuit 30 in the optional position within the lure fish body 61 as far as the displacement of each of the metallic part 64 and the piezoelectric element 63 is not inhibited. Also, the piezoelectric element 63 is arranged within the vacant portion 66 such that the main surface of the piezoelectric element 63 is perpendicular to the Z-axis. Alternatively, it is also possible to arrange the piezoelectric element 63 within the vacant portion 66 such that the main surface of the piezoelectric element 63 is perpendicular to the Y-axis. In this case, the metallic part 64 is arranged such that the metallic part 64 is caused to perform the seesaw motion by the movement of the ring portion 64a in the Y-direction.

In the light-emitting lure 10D, the lure fish body 61, the metallic part 64, and the eye metallic parts 69a, 69b collectively serve to connect the hooks 65a, 65b with the fishing line attached to the ring portion 64a. Therefore, it suffices to design appropriately the mechanical strength of, for example, the metallic part 64 and the mounting strength of each of the metallic part 64 and the eye metallic parts 69a, 69b to the lure fish body 61 in accordance with the kind and size of the aimed fish. Also, in order to prevent an excessively large force from being applied to the lure fish body 61 itself, it is possible to use means for joining the metallic part 64 to the hook 65 with a high mechanical strength such that the seesaw motion of the metallic part 64 is not hindered.

A light-emitting lure 10E, which is a light-emitting lure according to a fifth embodiment of the present invention, will now be described. Specifically, FIG. 14 is a side view schematically showing the construction of the light-emitting lure 10E. In the light-emitting lure 10D described previously, the resin sealing portion 68 is formed in the passageway 67 as a means for preventing the water intrusion into the inner region of the lure fish body 61. The light-emitting lure 10E is substantially equal in construction to the light-emitting lure 10D, except that, in the light-emitting lure 10E, a soft resin 78 such as a silicone rubber resin, which does not inhibit the bending of the piezoelectric element 63, is loaded in the vacant portion 66 inside the lure fish body 61. It should be noted that the piezoelectric element 63 and the power transmitting circuit 30 can be protected from the water intrusion without inhibiting the bending of the piezoelectric element 63 in the light-emitting lure 10E, too.

The present invention is not limited to the embodiments described above. For example, in each of the embodiments described above, a monomorph element and a bimorph element are taken up as the bending displacement type piezoelectric element. However, it is also possible to use as the piezoelectric element any of a unimorph element formed by attaching piezoelectric ceramic plate having electrodes formed on the front and back surfaces thereof to one surface of a reinforcing plate, a multi-morph element prepared by alternately laminating a piezoelectric ceramic thin plate and an electrode a plurality of times, in which every two electrode layers are connected to each other, and a lamination type unimorph element or a lamination type bimorph element prepared by attaching the particular multi-morph elements to one surface or both surfaces of a reinforcing plate.

Also, light-emitting diode is used as the light-emitting element in each of the embodiments described above. Alternatively, it is also possible to use various electroluminescence elements (e.g., thin film EL elements) as the light-emitting element.

Further, in each of the embodiments described above, the light-emitting lure has an outer contour conforming with a fish. However, the outer contour of the light-emitting lure is not particularly limited in the present invention. For example, it is possible for the light-emitting lure to assume the outer contour of any of various aquatic lives such as lobsters, crabs, octopuses and cuttlefishes in accordance with the catch aimed at in the lure fishing. It is also possible to change the shape of the light-emitting unit 52 in accordance with the shape of each of these aquatic lives.

### [Applicability in the Industry]

As described above, it is unnecessary to use a battery in the light-emitting lure of the present invention because the electricity generated from a piezoelectric element is used for causing the light-emitting element incorporated in the light-emitting lure to emit light. As a result, it is unnecessary to perform troublesome operations such as the replacement of the battery and charging operation utilizing a solar cell. It is also unnecessary to prepare an auxiliary battery. In addition, since it is possible to achieve the natural flickering light emission or lighting in accordance with the movement of the lure, it is possible to improve the fish gathering effect and the fishing effect. Further, the light-emitting lure of an optional shape can be manufactured with a high productivity by using the light-emitting unit defined in the present invention.

## Claims

1. A light-emitting lure, comprising:
a lure fish body that can be bent by an external stress;
at least one light-emitting element incorporated in the lure fish body such that the light-emitting element can be observed from outside; and
a flexion displacement type piezoelectric element incorporated in the lure fish body as a power source of the light-emitting element;
wherein the piezoelectric element generates an electric power in accordance with a bending of the lure fish body thereby causing the light-emitting element to emit light.

2. The light-emitting lure according to claim 1, wherein the lure fish body has a joint structure prepared by connecting a plurality of fish body-constituting members each consisting of a hard material by using a soft material, and the piezoelectric element is incorporated in a joint portion of the joint structure.

3. The light-emitting lure according to claim 1, wherein the lure fish body has a flexible structure formed of a soft resin material, and the piezoelectric element is incorporated in the lure fish body in a step of forming the soft resin material into a shape of the lure fish body.

4. The light-emitting lure according to claim 1, wherein the light-emitting element is a light-emitting diode.

5. The light-emitting lure according to claim 1, wherein the lure fish body is formed of a transparent or a translucent resin material, and the light-emitting element is incorporated in an inner region of the lure fish body.

6. The light-emitting lure according to claim 1, wherein the light-emitting elements are incorporated as both eyes of the lure fish body.

7. The light-emitting lure according to claim 1, which includes a plurality of light-emitting elements differing from each other in colors of the light emitted therefrom and which further comprises a changeover switch selectively allowing a light-emitting element selected from among the plural light-emitting elements to emit light of a prescribed color, wherein the changeover switch is incorporated in the lure fish body such that the changeover switch can be operated from outside the lure fish body.

8. A light-emitting lure, comprising:
a lure fish body;
a light-emitting element incorporated in the lure fish body such that the incorporated light-emitting element can be observed from outside;
a flexion displacement type piezoelectric element arranged inside the lure fish body such that the arranged piezoelectric element can be bent;
a metallic part including an external force-acting portion formed at one end in a longitudinal direction such that an external force acts on said external force-acting portion, and a fulcrum portion formed in an intermediate portion in the longitudinal direction such that a seesaw motion is generated when a prescribed force acts on the external force-acting portion, the metallic part being arranged in the lure fish body such that the external force-acting portion is positioned outside the lure fish body and the other end in the longitudinal direction is connected to or engaged with a free end of the piezoelectric element; and
power transmitting means that permits an electricity generated from the piezoelectric element to be transmitted to the light-emitting element by a bending of the piezoelectric element;
wherein, when a prescribed force is applied to the external force-acting portion, the piezoelectric element is bent by the seesaw motion generated within the metallic part so as to cause the piezoelectric element to generate an electric power and to cause the light-emitting element to emit light.

9. The light-emitting lure according to claim 8, wherein the light-emitting element is formed of a light-emitting diode.

10. The light-emitting lure according to claim 8, further comprising a resin sealing portion for preventing a water intrusion from around the metallic part into an inner region of the lure fish body.

11. The light-emitting lure according to claim 10, wherein the resin sealing portion is formed of a resin selected from a group consisting of a foamed silicone resin, a foamed urethane resin, a silicone rubber resin, and an urethane resin.

12. The light-emitting lure according to claim 8, wherein a soft resin is loaded in an inner region of the lure fish body.

13. The light-emitting lure according to claim 12, wherein the soft resin is a silicone rubber resin.

14. A light-emitting unit, comprising:
a cylindrical portion having both ends hermetically sealed with a pair of transparent lids;
a flexible rocking plate portion having one end fixed to the cylindrical portion;
a pair of light-emitting elements arranged inside the transparent lids; and
a flexion displacement type piezoelectric element arranged as a power source of the light-emitting element inside the rocking plate portion;
wherein the piezoelectric element generates an electric power by a bending of the rocking plate portion thereby causing the light-emitting element to emit light.
